# EUROPÄISCHE PATENTSCHRIFT

(11) **EP 1 125 629 B1**
(45) Veröffentlichungstag und Bekanntmachung des Hinweises auf die Patenterteilung: **23.11.2011**
(21) Anmeldenummer: 01102455.1
(22) Anmeldetag: 03.02.2001
(51) Int. Cl.: B01J 8/18

(54) **Strahlschichtapparat mit einer steuerbaren Gasanströmeinrichtung**
Jet bed apparatuses with adjustable gas-flow devices
Appareillage à lit aéré avec un dispositif réglable de débit de gaz

(30) Priorität: 05.02.2000 DE 10004939
(43) Veröffentlichungstag der Anmeldung: 22.08.2001
(73) Patentinhaber: Glatt Ingenieurtechnik GmbH, D-99427 Weimar (DE)
(72) Erfinder: Mörl, Lothar, Prof.Dr.-Ing.habil., 39291 Hohenwarte (DE); Heinrich, Stefan, Dipl.-Ing., 39116 Magdeburg (DE); Krüger, Gerhard, Doz.Dr.-Ing., 39126 Magdeburg (DE); Ihlow, Matthias, Dipl.-Ing., 39291 Möser (DE); Jordanova, Elka, Dipl.-Ing., 39106 Magdeburg (DE)
(74) Vertreter: Patent- und Rechtsanwaltssozietät Maucher, Börjes & Kollegen

(56) Entgegenhaltungen:
- DE-A- 3 400 397
- US-A- 4 095 534
- US-A- 5 213 768

## Beschreibung

Die Erfindung betrifft einen Strahlschichtapparat mit mindestens einer Strahleinströmungswand und einer der Strahleinströmungswand gegenüberliegenden Strahlrückströmungswand und mit einer steuerbaren Gasanströmeinrichtung.

Der erfindungsgemäße Strahlschichtapparat weist eine steuerbare Gasanströmeinrichtung auf, die insbesondere bei rechteckigen, langgestreckten Apparaten, deren Anströmbereich rinnenförmig ausgebildet ist und die seine seitlich geneigte Strahleinström-, gegebenenfalls auch eine seitlich geneigte Strahlrückströmwand aufweisen, anwendbar ist. Die Erfindung kann sowohl bei einseitigen als auch bei doppelseitigen Strahlschichtapparaten angewendet werden.

Zur Fluidisierung weitgehend beliebig geformter und in ihren Partikelabmessungen sowie Partikelmassen unterschiedlicher Güter in Strahlschichtapparaten sind regelbare Fluidisierungsgasströme erforderlich. Diese können zum einen dadurch realisiert werden, dass der Gasanströmeinrichtung des Strahlschichtapparates unterschiedliche Gasmengen zugeleitet werden, zum anderen kann aber auch die Gasanströmeinrichtung selbst als steuerbare Einrichtung ausgeführt sein.

So wird in der DE-OS 41 08 048 eine Gasanströmeinrichtung beschrieben, die eine Vielzahl von rohrförmigen Fluidisierungselementen aufweist, von denen jedes mit einer gesonderten Zuführleitung für das Fluidisierungsgas versehen ist und jede Zuführleitung ein Regelorgan zur Einzelregelung des Fluidisierungsgasstromes aufweist. Der apparate- und steuerungstechnische Aufwand einer derartigen Einrichtung ist sehr hoch. Außerdem sind bei im Kreislauf geführten Fluidisierungsgasen hohe Aufwendungen zur Reinigung der Gase notwendig, um funktionsstörende Ablagerungen in den Regelorganen sowie den Fluidisierungselementen zu verhindern.

Lösungen, bei denen die Gasanströmeinrichtung selbst als steuerbare Einrichtung ausgeführt ist, sind beispielsweise in der DE-PS 37 05 343 sowie der DE-OS 40 40 246 beschrieben. Bei beiden Lösungen weist die Gasanströmeinrichtung in ihrer Breite veränderbare Schlitze auf, mittels derer der Fluidisierungsgasstrom variiert werden kann. Bei der DE-OS 40 40 246 besteht die Gasanströmeinrichtung aus jalousienartig übereinander liegenden Elementen. Die zwischen den jalousienartigen Elementen liegenden Schlitze sind in ihrer Breite so veränderbar, dass eine gezielte Beeinflussung des Fluidisierungsgasstromes möglich ist.

In der DE-PS 34 00 397 ist eine Gasanströmeinrichtung für einen doppelseitigen rechteckigen, langgestreckten Strahlschichtapparat beschrieben. Hierbei ist die Gasanströmeinrichtung in Form von zwei rinnenförmigen Elementen ausgebildet, die durch ein dachförmiges Element so abgedeckt werden, dass zwischen den rinnenförmigen Elementen und dem dachförmigen Element für jede Strahlschichtapparatehälfte je eine spaltförmige Fluidisierungsgasanströmöffnung entsteht. Das dachförmige Element besitzt an seiner höchsten Stelle eine senkrecht angeordnete Zwischenwand, die die Trennwand beider Strahlschichtapparatehälften bildet. Es ist so angeordnet, dass es in seiner Höhe variierbar ist, so dass die Spaltbreite der Fluidisierungsgasanströmöffnung verändert werden kann. Das dachförmige Element kann zusätzlich mit in Strömungsrichtung des Fluidisierungsgasstromes weisenden Schlitzen versehen sein, wodurch eine spezielle Beeinflussung des Fluidisierungsgasstromes erreicht werden kann. Außerdem ist es möglich, das dachförmige Element um eine quer zur Strömungsrichtung des Fluidisierungsgasstromes liegende Achse zu drehen, wodurch eine in ihrer Breite über die Länge des Strahlschichtapparates unterschiedliche spaltförmige Fluidisierungsgasanströmöffnung gebildet wird. Der wesentliche Nachteil der beschriebenen Gasanströmeinrichtung ist ihre große Störanfälligkeit infolge von Ablagerungen an den den Fluidisierungsgasstrom steuernden Bauteilen, die insbesondere bei im Kreislauf geführten Fluidisierungsgasen auf Grund der Partikelbeladung der Fluidisierungsgase auftreten. Folgen dieser Ablagerungen sind Funktionseinschränkungen bzw. häufige Wartungs- oder Reinigungszyklen. Außerdem neigen die beschriebenen Gasanströmeinrichtungen bei hohen Strömungsgeschwindigkeiten zu Schwingungen und ermöglichen keine ausreichende Ausregelung von kurzzeitigen Belastungsschwankungen. Ein weiterer Nachteil der beschriebenen Gasanströmeinrichtungen besteht darin, dass es infolge örtlich und zeitlich wechselnder Strömungsgeschwindigkeiten häufig zum Durchfallen von Partikeln des zu fluidisierenden Gutes kommt. Prozessstörungen oder zusätzliche Einrichtungen zur Rückführung der durchgefallenen Partikel sind die Folge.

Aus der US-A-4 095 534 ist eine Gasanströmeinrichtung bekannt, mit welcher der für einen nachfolgenden Gasraum bestimmte Gasstrom, beispielsweise in einem Wirbelschichtapparat eingeregelt werden kann. Die vorbekannte Gasanströmeinrichtung weist dazu in einem feststehenden Gehäuse drehbare Platten auf, die an einem als Halte- und Drehvorrichtung dienenden Zylinder gehalten sind, welcher Zylinder in einem feststehenden Gehäuse drehbar ist. Durch Drehen des Zylinders werden die an ihm radial vorstehenden Platten derart verschwenkt, dass sich zwei gegenüberliegende Gasdurchströmungsquerschnitte zunehmend öffnen.

Ziel der Erfindung ist die Schaffung einer Strahlschichtapparatur mit einer steuerbaren Gasanströmeinrichtung, welche Gasanströmeinrichtung ohne hohen gerätetechnischen Aufwand auskommt, funktionssicher ist und lange störungsfreie Betriebsphasen des Strahlschichtapparats ermöglicht. Dazu besteht die Aufgabe, eine Strahlschichtapparatur mit einer Gasanströmeinrichtung zu entwickeln, bei der funktionsstörende Ablagerungen von im Fluidisierungsgas enthaltenen Partikeln an den den Fluidisierungsgasstrom steuernden Bauteilen weitgehend vermieden werden bzw. während des Betriebes entfernt werden können. Außerdem soll die Gasanströmeinrichtung des erfindungsgemäßen Strahlschichtapparats auch bei hohen Strömungsgeschwindigkeiten schwingungsfrei arbeiten und kurzzeitige schnelle Steuerbewegungen zur Ausregelung von kurzzeitigen Belastungsschwankungen zulassen.

Die erfindungsgemäße Lösung dieser Aufgabe besteht darin, dass die Gasanströmeinrichtung aus mindestens einem, Durchbrüche für das Hindurchtreten von Fluidisierungsgas aufweisenden, im unteren Bereich der Fluidisierungskammer des Strahlschichtapparates zwischen der Strahleinströmungswand und der Strahlrückströmungswand horizontal und so um seine Längsachse drehbar angeordnetem Zylinder besteht, und dass durch Drehung des Zylinders der effektive Querschnitt der Durchbrüche für das Einströmen des Fluidisierungsgases in die Fluidisierungskammer verändert wird.

Die steuerbare Gasanströmeinrichtungder erfindungsgemäßen Strahlschichtapparatur ist als ein quer zu seiner Längsachse Durchbrüche aufweisender Zylinder ausgeführt, der im unteren Bereich der Fluidisierungskammer des Strahlschichtapparats mit bevorzugt rechteckiger Grundfläche um seine Längsachse drehbar so zwischen Strahleinströmungswand und Strahlrückströmungswand angeordnet ist, dass er die Fluidisierungskammer des Strahlschichtapparats nach unten hin beziehungsweise seitlich im unteren Bereich der Gasrückströmungswand abschließt. Ein Teil der Mantelfläche des Zylinders bildet mindestens teilweise den Boden bzw. den unteren seitlichen Bereich der Gasrückströmungswand der Fluidisierungskammer, ein anderer Teil der Mantelfläche des Zylinders bildet einen Teil der Wand der Gasverteilkammer der Strahlschichtapparatur. Das Fluidisierungsgas gelangt von der Verteilkammer durch die Durchbrüche des Zylinders in die Fluidisierungskammer, wobei die Menge des durchströmenden Gases von der radialen Stellung des Zylinders und damit der Richtung und Lage der Durchbrüche abhängt. Durch Drehung des Zylinders kann die Menge des in die Fluidisierungskammer strömenden Gases beeinflusst werden. Es gehört mit zur Erfindung, dass um die Mantelfläche des Zylinders Fluidisierungsgasleiteinrichtungen angeordnet sind, wobei diese bevorzugt mindestens teilweise linienförmig eng an der Mantelfläche des Zylinders anliegen Die Gasleiteinrichtungen bewirken zum einen eine bessere Steuerung der Menge des hindurchtretenden Fluidisierungsgases, sie vermindern zum anderen auch deutlich die Ablagerung von im Fluidisierungsgas enthaltenen Partikeln auf dem Zylinder bzw. führen zur Ablösung von Ablagerungen bei Drehung des Zylinders.

Vorteilhaft ist die Anordnung eines rinnenförmigen Elementes unterhalb des Zylinders, wobei dieses rinnenförmige Element beispielsweise vom unteren Teil der Strahleinströmungswand der Fluidisierungskammer gebildet werden kann. Das rinnenförmige Element verhindert das Hindurchfallen von Partikeln aus der Fluidisierungskammer in die Gasverteilkammer. Eventuell bei Druckschwankungen aus der Strahlschicht nach unten durchfallende Partikel sammeln sich in dem rinnenförmigen Element und werden vom Fluidisierungsgas wieder in die Fluidisierungskammer getragen. Querschnittsform und Anordnung der Durchbrüche des Zylinders können sehr unterschiedlich sein. Ihre Lage zur Längsachse des Zylinders kann in weiten Grenzen variieren. Entscheidend für die Funktion der Erfindung ist, dass sie so gestaltet und angeordnet sind, dass bei Drehung des Zylinders um seine Längsachse in Wirkverbindung mit den an die Mantelfläche des Zylinders angrenzenden Wänden der Fluidisierungskammer oder spezieller angeordneter Gasleiteinrichtungen eine Veränderung der die Einströmung des Fluidisierungsgases in die Fluidisierungskammer bestimmenden effektiv sich ergebenden Querschnittsfläche der Durchbrüche bewirkt wird. Dabei kann es für die Ausbildung spezieller Strahlschichten auch vorteilhaft sein, wenn entlang der Längsachse des Zylinders unterschiedliche effektive Öffnungsquerschnittsflächen und damit unterschiedliche Fluidisierungsgasströme realisiert werden können. Mit quer zur Längsachse des Zylinders angeordneten rechteckigen, dreieckförmigen oder trapezförmigen Schlitzen wurden bisher gute Ergebnisse hinsichtlich der Steuerbarkeit der erfindungsgemäßen Gasanströmeinrichtung erreicht. Die Erfindung ist selbstverständlich nicht auf diese wenigen genannten Formen eingegrenzt.

Eine weitere Ausgestaltung der Erfindung besteht darin, den Zylinder länger als die Fluidisierungskammer des Strahlschichtapparates auszuführen, ihn mit in Längsrichtung bezüglich Querschnittsfläche und/oder Querschnittsform und/oder Lage unterschiedlichen Durchbrüchen zu versehen und in Längsrichtung verschiebbar anzuordnen. Dadurch kann der Fluidisierungsgasstrom zusätzlich beeinflusst werden. Es ist bei dieser Ausgestaltung der Erfindung beispielsweise auch möglich, deutlich voneinander abweichende Strahlschichtparameter zu realisieren, ohne größere Veränderungen am Strahlschichtapparat vorzunehmen.

Eine weitere Möglichkeit der Gestaltung der erfindungsgemäßen Gasanströmeinrichtung besteht darin, den Zylinder als Hohlzylinder mit Durchbrüchen in der Zylindermantelfläche auszuführen und innerhalb des Zylinders ein Steuerelement anzuordnen, mittels dessen die effektive Querschnittsfläche der Durchbrüche verändert werden kann. Dieses Steuerelement kann beispielsweise ein ebenfalls Durchbrüche aufweisender Zylinder sein. Durch Drehung diese inneren Zylinders wird die den Gasdurchtritt bestimmende effektive Querschnittsfläche der Durchbrüche verändert. Selbstverständlich kann das Steuerelement auch anders, beispielsweise als drehbar gelagerter Halbzylinder oder den Hohlzylinder in radialer Richtung durchspannendes ebenes um die Zylinderlängsachse drehbar gelagertes Element, das das Innere des Hohlzylinders in zwei Halbzylinder teilt, ausgeführt sein.

Neben den bereits beschriebenen Vorteilen zeichnet sich die erfindungsgemäße Gasanströmeinrichtung durch eine hohe Flexibilität in ihrer Steuerbarkeit aus. Kurzzeitige Belastungsschwankungen können dadurch optimal ausgeregelt werden, wodurch stabile und sichere Strahlschichten auch bei schwierig zu fluidisierenden Gütern zu realisieren sind.

Nachfolgend soll die Erfindung anhand eines Ausführungsbeispieles näher erläutert werden. Die zugehörigen Zeichnungen zeigen in
- Figur 1:: den Querschnitt eines schematisierten Strahlschichtapparates mit einer erfindungsgemäßen Gasanströmeinrichtung, in
- Figur 2:: den Querschnitt einer erfindungsgemäßen Gasanströmeinrichtung, in
- Figur 3:: einen mit dreieckförmigen Schlitzen versehenen Zylinder einer erfindungsgemäßen Gasanströmeinrichtung, in
- Figur 4:: den Querschnitt des mit dreieckförmigen Schlitzen versehenen Zylinders und in
- Figur 5:: den Querschnitt eines schematisierten doppelseitigen Strahlschicht- apparates mit erfindungsgemäßer Gasanströmeinrichtung.

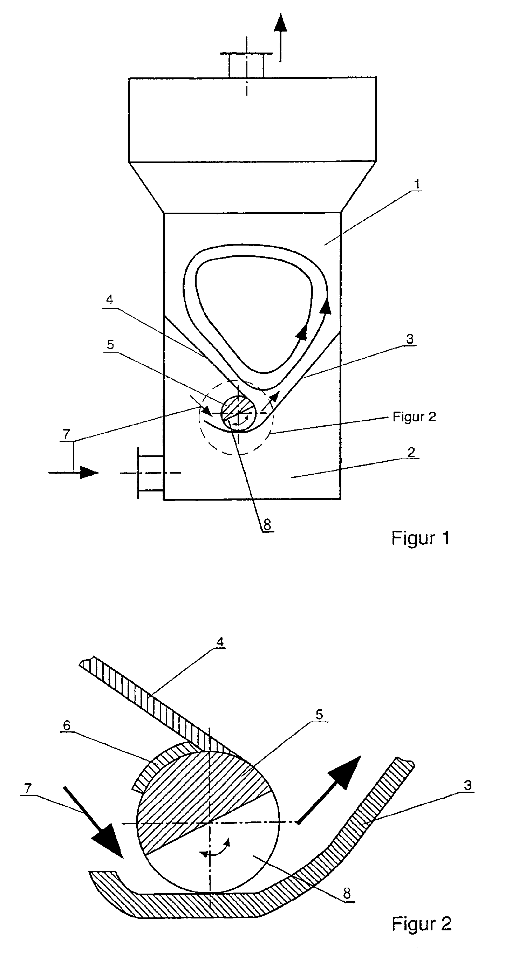

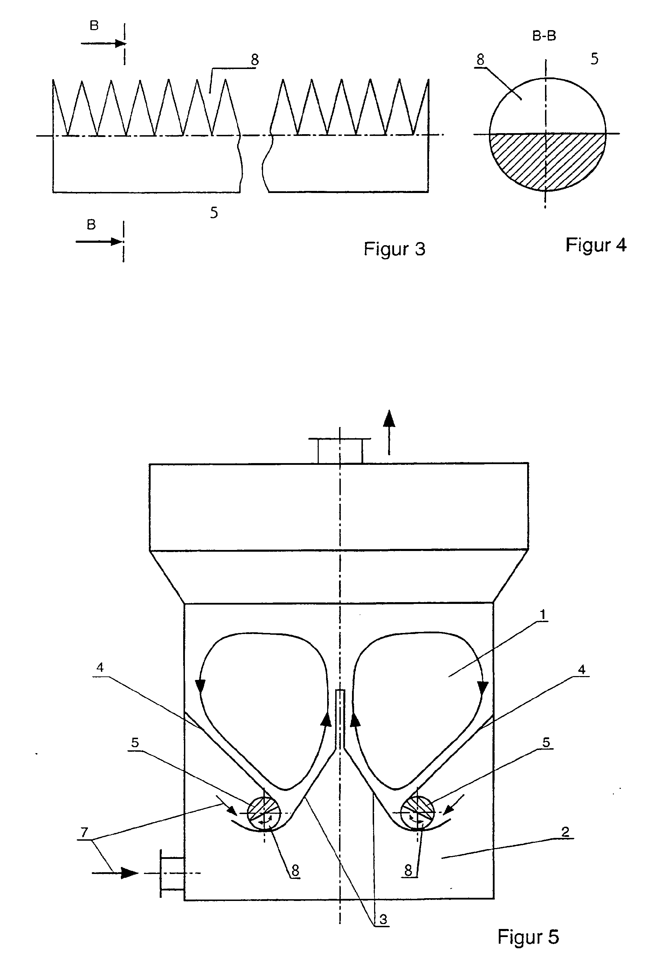

Die in Figur 1 gezeigte Strahlschichtapparatur weist eine Fluidisierungskammer 1 und eine darunter liegende Gasverteilkammer 2 auf. Die Fluidisierungskammer 1 ist gegenüber der Gasverteilkammer 2 durch eine Strahleinströmungswand 3, Strahlrückströmungswand 4 und die erfindungsgemäße Gasanströmeinrichtung 5 abgegrenzt. Strahleinströmungswand 3 und Strahlrückströmungswand 4 sind gegenüber der Senkrechten geneigt. Die Strahleinströmungswand 3 läuft nach unten hin rinnenförmig aus. Die Gasanströmrichtung 5 hat die Form eines Zylinders, der, wie in den Figuren 3 und 4 gezeigt, dreieckförmige Schlitze 8 aufweist. Der Zylinder 5 ist drehbar so im Strahlschichtapparat angeordnet, dass der mit Schlitzen 8 versehene Bereich an der rinnenförmig auslaufenden Strahleinströmungswand 3 und der halbkreisförmig geschlossene Bereich an der Strahlrückströmungswand 4 anliegt. Wie in Figur 2 gezeigt, befindet sich an der Strahlrückströmungswand 4 eine teilweise den Zylinder 5 umschließende Gasleiteinrichtung 6. Die Strahleinströmungswand 3, die Strahlrückströmungswand 4 und die Gasanströmeinrichtung 5 sind so angeordnet, dass ein seitlicher Eintritt des Fluidisierungsgases 7 in die Fluidisierungskammer 1 erfolgt. Das Fluidisierungsgas 7 strömt aus der Gasverteilkammer 2 durch die Schlitze 8 des Zylinders 5 in die Fluidisierungskammer 1. Durch Drehung des Zylinder 5 kann die effektiv für das Hindurchströmen des Fluidisierungsgases 7 zur Verfügung stehende Querschnittsfläche der z.B. dreieckförmigen Schlitze 8 verändert werden. Strömungsgeschwindigkeit und Menge des in die Fluidisierungskammer 1 einströmenden Fluidisierungsgases 7 können damit so gesteuert werden, dass eine stabile, walzenförmige Strahlschicht innerhalb der Fluidisierungskammer 1 entsteht. Die Beeinflussung des Fluidisierungsgasstromes durch Drehung des Zylinders 5 ist dabei so effektiv, dass auch geringfügige Strömungen der Strahlschicht ausgeregelt werden können.

Partikel des zu fluidisierenden Gutes, die infolge Druckschwankungen nach unten durchfallen, sammeln sich in der rinnenförmig nach unten auslaufenden Strahleinströmungswand 3 und werden durch das Fluidisierungsgas 7 in die Strahlschicht zurückgetragen.

Die Gestaltung der erfindungsgemäßen Gasanströmeinrichtung verhindert weitgehend das Auftreten von Ablagerungen, die den Gaseintritt in die Fluidisierungskammer behindern. Eventuell dennoch auftretende Ablagerungen lösen sich bei Drehung des Zylinders 5.

Figur 5 zeigt einen doppelseitig ausgeführten Strahlschichtapparat mit erfindungsgemäßer Gasanströmeinrichtung.

### LISTE DER BEZUGSZEICHEN

- 1: Fluidisierungskammer
- 2: Gasverteilkammer
- 3: Strahleinströmungswand
- 4: Strahlrückströmungswand
- 5: Zylinder
- 6: Gasleiteinrichtung
- 7: Fluidisierungsgas
- 8: Durchbrüche, Schlitze

## Patentansprüche

1. Strahlschichtapparat mit mindestens einer Strahleinströmungswand (3) und einer der Strahleinströmungswand (3) gegenüberliegenden Strahlrückströmungswand (4) und mit einer steuerbaren Gasanströmeinrichtung, **dadurch gekennzeichnet, dass** die Gasanströmeinrichtung aus mindestens einem, Durchbrüche (8) für das Hindurchtreten von Fluidisierungsgas (7) aufweisenden, im unteren Bereich der Fluidsierungskammer (1) des Strahlschichtapparates zwischen der Strahleinströmungswand (3) und der Strahlrückströmungswand (4) horizontal und so um seine Längsachse drehbar angeordnetem Zylinder (5) besteht, und dass durch Drehung des Zylinders (5) der effektive Querschnitt der Durchbrüche (8) für das Einströmen des Fluidisierungsgases (7) in die Fluidisierungskammer (1) verändert wird.

2. Strahlschichtapparat nach Anspruch 1,
**dadurch gekennzeichnet, dass** um den Zylinder (5) ein oder mehrere Fluidisierungsgasleiteinrichtungen (6) angeordnet sind.

3. Strahlschichtapparat nach Anspruch 2,
**dadurch gekennzeichnet, dass** mindestens eine Fluidisierungsgasleiteinrichtung (6) am Zylinder (5) in Längsrichtung mindestens linienförmig eng anliegt.

4. Strahlschichtapparat nach einem der Ansprüche 1 bis 3,
**dadurch gekennzeichnet, dass** unterhalb des Zylinders (5) eine die Zylindermantelfläche in radialer Richtung partiell umschließende Rinne angeordnet ist.

5. Strahlschichtapparat nach Anspruch 4,
**dadurch gekennzeichnet, dass** die Strahleinströmungswand (3) der Fluidisierungskammer (1) des Strahlschichtapparates nach unten den Zylinder (5) in radialer Richtung partiell, rinnenförmig umschließend ausläuft.

6. Strahlschichtapparat nach einem der Ansprüche 1 bis 5,
**dadurch gekennzeichnet, dass** die Durchbrüche (8) für das Hindurchtreten von Fluidisierungsgas (7) in Richtung der Längsachse des Zylinders (5) hinsichtlich ihres effektiven Querschnittes so bemessen sind, dass unterschiedliche Volumina an Fluidisierungsgas (7) hindurchtreten können.

7. Strahlschichtapparat nach Anspruch 6,
**dadurch gekennzeichnet, dass** die Durchbrüche (8) für das Hindurchtreten von Fluidisierungsgas (7) in Richtung der Längsachse des Zylinders (5) hinsichtlich ihres effektiven Querschnittes und ihrer radialen Lage so bemessen und angeordnet sind, dass in Abhängigkeit von der radialen Stellung des Zylinders (5) entlang der Längsachse des Zylinders (5) unterschiedliche Volumina an Fluidisierungsgas (7) hindurchtreten können.

8. Strahlschichtapparat nach einem der Ansprüche 1 bis 7,
**dadurch gekennzeichnet, dass** die Durchbrüche (8) für das Hindurchtreten von Fluidisierungsgas (7) im Zylinder (5) als seitliche quer zur Längsachse des Zylinders (5) liegende Schlitze ausgeführt sind.

9. Strahlschichtapparat nach Anspruch 8,
**dadurch gekennzeichnet, dass** die Querschnittsfläche der Schlitze (8) die Form eines Dreieckes besitzt.

10. Strahlschichtapparat nach einem der Ansprüche 1 bis 9,
**dadurch gekennzeichnet, dass** der Zylinder (5) als in seiner Mantelfläche Öffnungen aufweisender Hohlzylinder ausgeführt ist und innerhalb des Hohlzylinders ein Steuerelement angeordnet ist, mittels dessen der effektive Querschnitt der Öffnungen verändert werden kann.

11. Strahlschichtapparat nach Anspruch 10,
**dadurch gekennzeichnet, dass** das innerhalb des Hohlzylinders angeordnete Steuerelement als drehbar gelagerter Durchbrüche aufweisender Zylinder ausgeführt ist.

12. Strahlschichtapparat nach einem der Ansprüche 1 bis 11,
**dadurch gekennzeichnet, dass** die Länge des Zylinders (5) größer als die Länge der Fluidisierungskammer (1) des Strahlschichtapparates ist, dass der Zylinder (5) in Längsrichtung bezüglich Querschnittsfläche und/oder Querschnittsform und/oder Lage unterschiedliche Durchbrüche (8) aufweist und der Zylinder (5) in Längsrichtung verschiebbar im Strahlschichtapparat angeordnet ist.

## Claims

1. Jet bed apparatus having at least one jet inflow wall (3) and a jet backflow wall (4) opposite the jet inflow wall (3) and having a controllable gas inflow device, **characterised in that** the gas inflow device comprises at least one cylinder having apertures (8) for the passage of fluidising gas (7), which is arranged in the lower region of a fluidising chamber (1) of the jet bed apparatus between the jet inflow wall (3) and the jet backflow wall (4) so as to be horizontal and thus rotatable about its longitudinal axis, and **in that** by rotation of the cylinder (5) the effective cross-section of the apertures (8) for the inflow of the fluidising gas (7) into the fluidising chamber (1) is altered.

2. Jet bed apparatus according to claim 1, **characterised in that** one or more fluidising gas conveying devices (6) are arranged around the cylinder (5).

3. Jet bed apparatus according to claim 2, **characterised in that** at least one fluidising gas conveying device (6) abuts closely on the cylinder (5) In the longitudinal direction at least in a linear manner.

4. Jet bed apparatus according to one of claims 1 to 3, **characterised in that** underneath the cylinder (5) is a channel that partially surrounds the outer surface of the cylinder in the radial direction.

5. Jet bed apparatus according to claim 4, **characterised in that** the jet inflow wall (3) of the fluidising chamber (1) of the jet bed apparatus terminates so as to partially surround the cylinder (5) at the bottom in the radial direction in a channel shape.

6. Jet bed apparatus according to one of claims 1 to 5, **characterised in that** the apertures (8) for the passage of fluidising gas (7) in the direction of the longitudinal axis of the cylinder (5) are dimensioned in terms of their effective cross-section such as to allow different volumes of fluidising gas (7) to pass through.

7. Jet bed apparatus according to claim 6, **characterised in that** the apertures (8) for the passage of fluidising gas (7) in the direction of the longitudinal axis of the cylinder (5) are dimensioned and arranged in terms of their effective cross-section and radial position such as to allow different volumes of fluidising gas (7) to pass through, depending on the radial position of the cylinder (5) along the longitudinal axis of the cylinder (5).

8. Jet bed apparatus according to one of claims 1 to 7, **characterised in that** the apertures (8) for the passage of fluidising gas (7) in the cylinder (5) are formed as lateral slots located transversely of the longitudinal axis of the cylinder (5).

9. Jet bed apparatus according to claim 8, **characterised in that** the cross-sectional area of the slots (8) is in the shape of a triangle.

10. Jet bed apparatus according to one of claims 1 to 9, **characterised in that** the cylinder (5) is embodied as a hollow cylinder having openings in its outer surface and inside the hollow cylinder is arranged a control element by means of which the effective cross-section of the openings can be varied.

11. Jet bed apparatus according to claim 10, **characterised in that** the control element arranged inside the hollow cylinder is embodied as a cylinder comprising rotatably mounted apertures.

12. Jet bed apparatus according to one of claims 1 to 11, **characterised in that** the length of the cylinder (5) is greater than the length of the fluidising chamber (1) of the jet bed apparatus, **in that** the cylinder (5) has apertures (8) that differ in the longitudinal direction in terms of their cross-sectional area and/or cross-sectional shape and/or position, and the cylinder (5) is mounted in the jet bed apparatus so as to be movable in the longitudinal direction.

## Revendications

1. Appareillage à lit fluidisé avec au moins une paroi d'afflux de jet (3) et une paroi de reflux de jet (4) opposée à la paroi d'afflux de jet (3), et avec un dispositif asservissable de soufflage de gaz, **caractérisé en ce que** le dispositif de soufflage de gaz est constitué d'au moins un cylindre (5), présentant des percements (8) pour le passage de gaz de fluidisation (7) et disposé horizontalement dans la région inférieure de la chambre de fluidisation (1) de l'appareillage à lit fluidisé entre la paroi d'afflux de jet (3) et la paroi de reflux de jet (4), et ainsi à rotation autour de son axe longitudinal, et **en ce que** la rotation du cylindre (5) modifie la section effective des percements (8) pour l'afflux du gaz de fluidisation (7) dans la chambre de fluidisation (1).

2. Appareillage à lit fluidisé selon la revendication 1, **caractérisé en ce qu'**un ou plusieurs dispositifs (6) de guidage de gaz de fluidisation sont disposés autour du cylindre (5).

3. Appareillage à lit fluidisé selon la revendication 2, **caractérisé en ce qu'**au moins un dispositif (6) de guidage de gaz de fluidisation s'applique étroitement au moins linéairement en direction longitudinale contre le cylindre (5).

4. Appareillage à lit fluidisé selon l'une des revendications 1 à 3, **caractérisé en ce qu'**une rigole entourant partiellement en direction radiale la face d'enveloppe du cylindre est disposée en dessous du cylindre (5).

5. Appareillage à lit fluidisé selon la revendication 4, **caractérisé en ce que** la paroi d'afflux de jet (3) de la chambre de fluidisation (1) de l'appareillage à lit fluidisé se termine en entourant partiellement en direction radiale vers le bas, en forme de rigole, le cylindre (5).

6. Appareillage à lit fluidisé selon l'une des revendications 1 à 5, **caractérisé en ce que** les percements (8) pour le passage de gaz de fluidisation (7) dans la direction de l'axe longitudinal du cylindre (5) sont, en ce qui concerne leur section effective, dimensionnés de telle sorte que différents volumes de gaz de fluidisation (7) peuvent passer par ces percements.

7. Appareillage à lit fluidisé selon la revendication 6, **caractérisé en ce que** les percements (8) pour le passage de gaz de fluidisation (7) dans la direction de l'axe longitudinal du cylindre (5) sont, en ce qui concerne leur section effective et leur position radiale, dimensionnés et disposés de telle sorte que, en fonction de la position radiale du cylindre (5) le long de l'axe longitudinal du cylindre (5), différents volumes de gaz de fluidisation (7) peuvent passer par ces percements.

8. Appareillage à lit fluidisé selon l'une des revendications 1 à 7, **caractérisé en ce que** les percements (8) pour le passage de gaz de fluidisation (7) dans le cylindre (5) sont réalisés sous la forme de fentes latérales disposées transversalement à l'axe longitudinal du cylindre (5).

9. Appareillage à lit fluidisé selon la revendication 8, **caractérisé en ce que** l'aire de section des fentes (8) possède la forme d'un triangle.

10. Appareillage à lit fluidisé selon l'une des revendications 1 à 9, **caractérisé en ce que** le cylindre (5) est réalisé sous la forme d'un cylindre creux présentant des ouvertures dans sa face d'enveloppe, et un élément de commande, au moyen duquel la section effective des ouvertures peut être modifiée, est disposé à l'intérieur du cylindre creux.

11. Appareillage à lit fluidisé selon la revendication 10, **caractérisé en ce que** l'élément de commande disposé à l'intérieur du cylindre creux est réalisé sous forme de cylindre monté à rotation et présentant des percements.

12. Appareillage à lit fluidisé selon l'une des revendications 1 à 11, **caractérisé en ce que** la longueur du cylindre (5) est supérieure à la longueur de la chambre de fluidisation (1) de l'appareillage à lit fluidisé, **en ce que** le cylindre (5) présente en direction longitudinale des percements (8) différents quant à l'aire de section et/ou la forme de section et/ou la position, et le cylindre (5) est disposé à translation en direction longitudinale dans l'appareillage à lit fluidisé.
